Europäisches Patentamt

European Patent Office

Office européen des brevets

(19)

(11) **EP 0 508 558 B1**

(12) **EUROPÄISCHE PATENTSCHRIFT**

(45) Veröffentlichungstag und Bekanntmachung des Hinweises auf die Patenterteilung:
**21.01.1998 Patentblatt 1998/04**

(51) Int Cl.⁶: **G01N 21/21**

(21) Anmeldenummer: **92250078.0**

(22) Anmeldetag: **03.04.1992**

(54) **Apparat für ellipsometrische Untersuchungen von Materialien**

Apparatus for ellipsometric investigations of materials

Appareil pour l'examen de matériaux par ellipsométrie

(84) Benannte Vertragsstaaten:
**CH DE FR GB IT LI NL SE**

(30) Priorität: **08.04.1991 DE 4111737**

(43) Veröffentlichungstag der Anmeldung:
**14.10.1992 Patentblatt 1992/42**

(73) Patentinhaber: **Hahn-Meitner-Institut Berlin Gesellschaft mit beschränkter Haftung D-14109 Berlin (DE)**

(72) Erfinder:
• **Cramer, Ludger, Dipl.-Phys.**
  **W-1000 Berlin 28 (DE)**
• **Duwe, Hartmut, Dipl.-Phys.**
  **W-1000 Berlin 19 (DE)**
• **Lewerenz, Hans-Joachim, Dr.rer.nat.**
  **W-1000 Berlin 39 (DE)**

(74) Vertreter: **Wolff, Konrad Heinrich-Hertz-Institut für Nachrichtentechnik Berlin GmbH, Gemeinsamer Patentservice, Hausvogteiplatz 5-7 10117 Berlin (DE)**

(56) Entgegenhaltungen:
**WO-A-86/07631          DE-C- 3 419 463**

• **APPLIED OPTICS Bd. 28, Nr. 15, 1. August 1989, NEW YORK, US Seiten 3187 - 3198 R. F. COHN ET AL. 'Absolute and random error analysis of the dynamic imaging microellipsometry technique'**
• **JOURNAL OF THE OPTICAL SOCIETY OF AMERICA Bd. 5, Nr. 5, Mai 1988, Seiten 681 - 689 R.M.A. AZZAM ET AL 'General analysis and optimization of the four-detector photopolarimeter'**

## Beschreibung

Die Erfindung bezieht sich auf eine Apparatur für ellipsometrische Untersuchungen von Materialien, mit:

- Einrichtungen zur Erzeugung von Sondenlicht und zur Beeinflussung des Sondenlichts zumindest hinsichtlich seines Polarisationszustandes,
- einer Vorrichtung zur Halterung eines mittels des Sondenlichts zu untersuchenden Prüflings,
- einer Analysator-Einrichtung für das vom Prüfling kommende Sondenlicht, mit elektrischen Nachweismitteln zum Erfassen der Intensitäten von vier, jeweils mittels diskreter Elemente selektierter Komponenten unterschiedlicher Polarisation, die zur vollständigen Bestimmung des Stokes-Vektors erforderlich sind,

und mit

- einem Prozeßrechner, dem die als Meßdaten erfaßten Intensitätswerte zugeführt werden, zur Auswertung und Verarbeitung der Meßdaten für die selbsttätige Steuerung von Einrichtungen und Vorrichtungen der Ellipsometer-Apparatur und für die Ausgabe von Informationen bezüglich der Untersuchungsergebnisse.

Der Stand der Technik, von dem die Erfindung ausgeht, ist aus der DE - C 34 19 463 bekannt. Damit lassen sich Stoffeigenschaften von Proben, insbesondere Reflexionseigenschaften von Probenoberflächen bzw. von Oberflächenschichten der Proben erfassen. Bei der hierfür vorgesehenen bekannten Apparatur enthält die im Strahlengang zwischen der Probe und einem photoelektrischen Detektor befindliche Analysator-Einrichtung mehrere, in den Strahlengang sequentiell einbringbare Reflektionselemente, deren Einfluß auf den Polarisationszustand abgestuft und vorbestimmt ist. Für eine vollständige Stokes-Vektor-Ellipsometrie sind vier, jeweils spezielle Komponenten des polarisierten Sondenlichts selektierende Reflexionselemente vorzusehen. Sobald alle Meßwerte der selektierten Intensitäten vorliegen, kann der Stokes-Vektor angegeben werden.

Aus der WO-A-86/07631 (vgl. auch: US-A-4 681 450 sowie "Optics Letters", Jul. 1985 Bd. 10 Nr. 7, Seiten 309 bis 311) ist ein Polarimeter bekannt, mit dem alle vier Stokes-Parameter simultan gemessen werden können. Das einfallende Licht, dessen Polarisationszustand analysiert werden soll, wird von vier, strahlenoptisch aufeinanderfolgenden, im wesentlichen baugleichen Detektoren erfaßt. Die Oberflächen dieser Detektoren sind mit dielektrischen Dünnfilmen zu beschichten, die die Reflexion von Licht einer bestimmten Polarisation gewährleisten. Somit dienen derartige Detektoren gleichzeitig als Polarisatoren. Gemessen wird jeweils das absorbierte, weitergeleitet zum nachfolgenden Detektor das reflektierte Licht.

Für den Aufbau und die Funktionsweise von Analysator-Einrichtungen, mit denen von einem Prüfling kommendes Sondenlicht in seiner Polarisation modifiziert bzw. geändert wird, können auch Elemente eingesetzt werden, die eine Teilpolarisation oder eine Doppelbrechung erzeugen oder es kann eine optische oder eine geometrische Drehrichtung verwendet werden.

Eine gleichzeitige Messung von zwei Komponenten unterschiedlicher Polarisation ist möglich, wenn das zu untersuchende Licht z.B. in zwei senkrecht zueinander linear polarisierte Strahlen räumlich getrennt wird und für diese jeweils ein Detektor vorgesehen ist, vgl. z.B. DE-A-37 08 148 und auch EP-A-0 102 470.

Für ellipsometrische Untersuchungen von Materialien und Strukturen mit photoaktiven Eigenschaften besteht ein technisches Problem besonderer Art darin, daß Anforderungen sowohl bezüglich hoher Meßgenauigkeit als auch besonders bezüglich hoher Empfindlichkeit zu erfüllen sind, damit schwaches Sondenlicht eingesetzt werden kann, das nicht zu unerwünschten Photoeffekten führt. Außerdem sollen Veränderungen des Polarisationsgrades des von einem Prüfling reflektierten Sondenlichts zu berücksichtigen sein, um systembedingte Fehlerquellen weitgehend ausschließen zu können. Besonders für in-situ-Untersuchungen ist es wichtig, daß die Informationen über das Untersuchungsergebnis in Echtzeit vorliegen.

Zur Lösung des vorstehend angedeuteten technischen Problems sieht die Erfindung bei einer Apparatur der eingangs genannten Art vor, daß die Analysator-Einrichtung, bei der in Stufen aus im wesentlichen baugleichen und strahlenoptisch aufeinander ausgerichteten Modulen die selektierten Komponenten unterschiedlicher Polarisation simultan erfaßt werden, vier baugleiche und strahlenoptisch aufeinander ausgerichtete Module aufweist, die jeweils ein als Brewsterplatte ausgebildeten Polarisator als optisches Element und einen opto-elektrischen Detektor enthalten, und daß jeder der Polarisatoren unter dem Brewsterwinkel zum einfallenden Lichtstrahl justiert ist und eine zum zugeordneten Detektor gelangende, spezifisch polarisierte reflektierte Komponente als Meßlichtstrahl sowie einen zum Modul einer vorhandenen nachfolgenden Stufe gelangenden, nach naturgesetzlichen Beziehungen sowohl hinsichtlich seines Polarisationszustandes als auch seines Polarisationsgrades beeinflußten Restlichtstrahl als transmissive Komponente abgibt, und daß der Prozeßrechner in Echtzeit alle Meßdaten auswertet und die auszugebenden Informationen über Polarisationszustand und Polarisationsgrad des vom Prüfling kommenden Sondenlichts bereitstellt.

Hiermit wird es ermöglicht, für das zu analysierende Sondenlicht in Echtzeit absolute Intensitätsmessungen durchzuführen und allein damit alle Informationen über den Polarisationszustand und den Polarisationsgrad zu erhalten. Dabei sind ohne mechanische oder elektromagnetische Einstellarbeiten an optischen Komponenten der Polarisationszustand und der Polarisationsgrad des vom Prüfling reflektierten oder transmittierten Sondenlichts mit hoher Präzision zu bestimmen. Das von einem Modul zum nächsten gelangende Restlicht ist in seinem Polarisationszustand nur so weit verändert, daß eindeutige Rückschlüsse auf den vor dieser Veränderung herrschenden Zustand gezogen werden können. Hierfür gelten naturgesetzliche Beziehungen, die in Echtzeit vom Prozeßrechner berücksichtigt werden.

Eine planparallel geschliffene Glasplatte, die unter dem Brewsterwinkel im Strahlengang angeordnet ist, wirkt in Reflexion als totaler Linearpolarisator und in Transmission als partieller Linearpolarisator. Auftreffendes Licht, das in der Einfallsebene schwingt, wird nicht reflektiert und vollständig transmittiert; senkrecht zur Einfallsebene schwingendes Licht wird teilweise reflektiert und teilweise transmittiert.

Grundsätzlich ist für jede Grenzfläche jeweils eine Transmissions- und eine Reflexions-Matrix zu ermitteln. Die Reflexion an der, von der Lichtquelle aus gesehen, hinteren Grenzfläche der Brewsterplatte kann jedoch unberücksichtigt bleiben, da sich in der Praxis die Brewsterplatte mit einer solchen Dicke ausbilden läßt, die ein Ausblenden der Reflexion von der hinteren Grenzfläche ermöglicht.

Einzelheiten hierzu sowie zu besonders vorteilhaften Ausführungsformen der Erfindung, die auch Gegenstand von Unteransprüchen sind, werden nachstehend näher erläutert.

Der Weg zur Angabe der Matrizen führt über die aus den Fresnelschen Koeffizienten für Transmission und Reflexion berechneten Reflektivitäten $R_p$ und $R_s$ und Transmittanzen $T_p$ und $T_s$ (Index p bedeutet: parallel polarisiert; s bedeutet: senkrecht polarisiert).

Im Fall der Brewsterplatte ist die maximale Transmittanz $T_{max} = T_p = 1$. Die minimale Transmittanz $T_{min} = T_s$ ist um einen berechenbaren Anteil geschwächt, verschwindet jedoch keinesfalls vollständig. Für diese Schwächung gilt die Beziehung

$$T_{min} = \frac{(2 \times n)^4}{(1 + n^2)^4}$$

(Beispiel: mit n = 1,5 folgt $T_{min} = 0{,}726$).

Wählt man für $T_{min}$ die Abkürzung A, lautet die komplette Müllermatrix für die Transmission:

$$M_{BT} = \frac{1}{2} \begin{vmatrix} 1 + A & 1 - A & 0 & 0 \\ 1 - A & 1 + A & 0 & 0 \\ 0 & 0 & 2 \times A^{1/2} & 0 \\ 0 & 0 & 0 & 2 \times A^{1/2} \end{vmatrix}$$

Für die Reflexion führt eine analoge Vorgehensweise unter alleiniger Berücksichtigung der Reflexion an der vorderen Grenzfläche zur Müllermatrix für die Reflexion:

$$M_{BR} = \frac{1}{2} \begin{vmatrix} Rs & Rs & 0 & 0 \\ Rs & Rs & 0 & 0 \\ 0 & 0 & 0 & 0 \\ 0 & 0 & 0 & 0 \end{vmatrix}$$

Bei einer Anordnung von Brewsterplatten, die eine Bestimmung des Stokesvektors des zu analysierenden Lichts ermöglicht, sind die vier Komponenten des Stokesvektors definiert als

$$S = \begin{Bmatrix} S_o \\ S_1 \\ S_2 \\ S_3 \end{Bmatrix} = \begin{Bmatrix} I_o = I_x + I_y = I_{+45} + I_{-45} = I_r + I_1 \\ I_x - I_y \\ I_{+45} - I_{-45} \\ I_r - I_1 \end{Bmatrix}$$

Dabei bedeuten:

I:      jeweils hinter speziell orientiertem Totalpolarisator gemessene Intensität;

x,y:     lineare Polarisation mit Hauptachse in der Einfallsebene (x) bzw. senkrecht zu dieser (y);

±45:     lineare Polarisation mit Hauptachse unter ±45° zur Einfallsebene;

r,l:     totale rechts- bzw. links-zirkulare Polarisation.

Die Komponente $I_o$ gibt die totale Lichtintensität an und kann als Summe zweier komplementärer Intensitätsmessungen ermittelt werden.

Damit jedoch nicht vier voneinander unabhängige Messungen mit Totalpolarisatoren durchgeführt werden müssen, um alle Komponenten des Stokesvektors zu erhalten, geht die Erfindung von folgender Überlegung aus:

Es werden zunächst zwei Brewsterplatten betrachtet, die im Stahlengang hintereinander in solcher Orientierung angeordnet sind, daß die von der ersten Platte reflektierte Intensität $I_{d1}$ proportional zu $I_y$ und die von der zweiten Platte reflektierte Intensität $I_{d2}$, die von der ersten Platte völlig ungeschwächt transmittiert wurde, mit dem gleichen Faktor k proportional zu $I_x$ ist. Es können also zunächst bereits

$$I_{d1} = k * I_y$$

und

$$I_{d2} = k * I_x$$

gleichzeitig gemessen und die Komponenten $S_0$ und $S_1$ des Stokesvektors in Echtzeit bestimmt werden.

Eine dritte Brewsterplatte, im Strahlengang des von der zweiten Brewsterplatte transmittierten Restlichts unter 45° angeordnet, reflektiert die Intensität $I_{d3}$. Dafür ist zu beachten, daß diese proportional $I_{-45}$ ist und die ursprüngliche Intensität inzwischen durch die gleichmäßige Schwächung A der orthogonalen x- und y-Komponenten vermindert wurde. Es gilt also:

$$I_{d3} = k * A * I_{-45}.$$

Zur Bestimmung von zirkular polarisierten Anteilen mit einem linear polarisierenden Analysator kann ein Viertelwellenlängen-Plättchen im Strahlengang vorgesehen werden, das mit seiner Hauptachse parallel zur Einfallsebene orientiert wird und dem eine vierte Brewsterplatte unter 45° folgt. Die dort reflektierte Intensität $I_{d4}$ ist proportional $I_1$. Ein Ausdruck u für die von den vorhergehenden drei Brewsterplatten abgeschwächte Gesamtintensität ist komplizierter als im zuvor behandelten Fall und hängt zudem von der Größe von $I_{-45}$ ab. Es gilt:

$$I_{d4} = k * u * I_1.$$

Damit zeigt sich, daß vier gleichzeitige Messungen für $I_{d1}$, $I_{d2}$, $I_{d3}$, $I_{d4}$ ausreichen und $I_y$, $I_x$, $I_{-45}$, $I_1$ daraus unmittelbar sowie $I_{45}$ und $I_r$ über die Beziehung

$$I_{45} + I_{-45} = I_r + I_1 = I_0$$

mittelbar in Echtzeit bestimmt werden können.

Von diesen qualitativen Überlegungen ausgehend lassen sich die exakten analytischen Beziehungen bestimmen, für die sich ergibt:

$$I_{d1} = R_s * I_y$$

$$I_{d2} = R_s * I_x$$

$$I_{d3} = R_s * A * I_{-45}$$

$$I_{d4} = R_s * A^{3/2} * I_1.$$

Die vorstehenden Beziehungen lassen sich auch darstellen als Matrixmultiplikation des Stokesvektors der einfallenden Lichtwelle mit der Matrix des Analysators - $M_{ana}$ - und dem Vektor der vier gemessenen Intensitäten als Ergebnis $I_d = M_{ana} * Si$ mit

$$M_{ana} = R_s/2 \begin{vmatrix} 1 & -1 & 0 & 0 \\ 1 & 1 & 0 & 0 \\ A & 0 & -A & 0 \\ A*(1+A)/2 & 0 & A*(1-A)/2 & A/2 \end{vmatrix}$$

Der Wert der Determinante von $M_{ana}$ ist $A^2$ und stellt ein Maß für die Empfindlichkeit des Analysators dar.

Die Inversion dieser Beziehungen ergibt für die Komponenten des gesuchten Stokesvektors Si:

$$Si_0 = 1/R_s * (Id_1 + Id_2)$$

$$Si_1 = 2 * Id_2/R_s + Si_0$$

$$Si_2 = Si_0 - 2 * I_{d3}/(R_s * A)$$

$$Si_3 = Si_0*(1+A)/(2*A^{1/2}) + Si_2*(1-A)/(2*A^{1/2}) - 2*I_{d4}/(R_s*A^{1/2})$$

Da $R_s$ und A nur vom Brechungsindex n abhängen, lassen sich also mit der erfindungsgemäßen Anordnung von Brewsterplatten aus nicht absorbierendem Material als Polarisatoren über sehr schlichte, lineare und in Echtzeit zu berechnende Beziehungen die Komponenten des Stokesvektors des in den Analysator gelangenden Lichtstrahls vollständig bestimmen.

Ein besonderer Vorzug der erfindungsgemäßen Analysatoreinheit liegt in der ausgezeichneten Justierbarkeit der Polarisatoren unter dem Brewsterwinkel. Dieser hängt über die Brechzahl n allerdings von der Wellenlänge des einfallenden Lichts ab. Es ist jedoch keineswegs eine Beschränkung auf nur eine diskrete Wellenlänge gegeben. Gelangt nämlich Licht anderer Wellenlänge als der, mit der die Justage erfolgte, zur Analysatoreinheit gemäß der Erfindung, wirken die Brewsterplatten sowohl in Reflexion als auch in Transmission als partielle Linearpolarisatoren. Vom Licht solcher Wellenlängen wird also auch ein gewisser Anteil der parallel polarisierten Komponenten reflektiert, und es lassen sich auch hierfür die Beziehungen für die Komponenten des gesuchten Stokesvektors angeben, die für alle Lichtwellenlängen gelten, bei denen die Abweichungen vom Brewsterwinkel zwischen senkrechtem Lichteinfall und dem Grenzwinkel für Totalreflexion liegen.

Weiterhin ergibt sich daraus, daß transmissive und reflektive Komponenten bezüglich ihrer Funktion als Meß- und Restlichtstrahl auch ihre Rollen tauschen können. Dann allerdings darf für untersuchte Wellenlängen der Justagewinkel nicht mit dem Brewsterwinkel übereinstimmen.

Die vorstehend dargelegten Zusammenhänge gelten prinzipiell auch für Detektoren, die aus absorbierendem Material mit reflektierenden Oberflächen bestehen und in entsprechender Orientierung eingesetzt werden, also Polarisator und Detektor in sich vereinigen. Für absorbierende Materialien ergeben sich für $I_{d1}$ bis $I_{d3}$ die bereits oben erläuterten Beziehungen. Bei $I_{d4}$ ist zusätzlich die Phasenverschiebung zwischen p- und s-Komponente des Lichts bei Reflexion an absorbierender Materialoberfläche zu berücksichtigen. Die hierbei notwendige Einschränkung besteht darin, daß die Reflexion nicht genau so wie die eines Viertelwellenlängenplättchens sein darf.

Durch eine Abweichung des Einfallswinkels des Lichtstrahls auf die Strahlteiler vom Brewsterwinkel wird die Determinante der Matrix der Analysatoreinheit kleiner, d.h. die Empfindlichkeit sinkt. Für die in der eingangs zum Stand der Technik schon aufgeführten US-A 4 681 450 beschriebene Anordnung eines Polarimeters mit vier reflektierenden Detektoren ergibt sich der Wert der Determinante für die optimale Konfiguration nur zu etwa 0.1 (vgl. "J. Opt. Soc. Am. A", Vol. 5, 1988, Seite 681), da sie in Reflexion den Strahl durch die Anordnung fädelt und deshalb von der hohen Selektivität der Reflexion für die verschiedenen Polarisationsrichtungen im Brewsterwinkel keinen Gebrauch machen kann. Zum Vergleich liefert die Anordnung mit Brewsterplatten in Transmission eine Determinante von etwa 0.5, ist also 5-mal empfindlicher.

Bei Ausführungsformen der Erfindung kann als Sondenlicht übrigens auch eine nur teilweise polarisierte Synchrotronstrahlung zum Einsatz gelangen.

Der Polarisationsgrad, ausgedrückt als

$$P = \frac{(S_1{}^2 + S_2{}^2 + S_3{}^2)^{1/2}}{S_0}$$

und die Reflektivität, die sich bei bekannter, d.h. mittels eines Referenz-Detektors an der Strahlungsquelle gemessener Intensität des auf den Prüfling fallenden Lichts im Verhältnis zu $S_0$ bestimmen läßt, werden durch die Erfindung also alle erforderlichen Informationen in Echtzeit zur Verfügung gestellt. Derartige Ergebnisse können herkömmliche Ellipsometer nicht liefern. Gehen nämlich Reflektivität des Prüflings und Depolarisationseffekte am Prüfling unkontrolliert in die Ergebnisse ein und wird der Polarisationsgrad mit 1 angenommen oder müssen die einzelnen Messungen zeitlich versetzt und dabei noch Komponenten ausgetauscht werden, bringt dies für die Interpretation von Meßergebnissen Schwierigkeiten mit sich, die durch die Erfindung ausgeschlossen werden.

Besonders vorteilhaft sind Ausführungsformen der Erfindung mit Kameras als opto-elektrische Detektoren. Solchen Bildsensoren wird nur das Meßlicht zugeführt; ihre Oberflächen brauchen also nicht die Anforderungen zu erfüllen, die beim Stand der Technik gemäß der schon erwähnten US-A 4 681 450 gestellt werden. Unter Echtzeitverarbeitung von vier Bildern kann bei dieser Ausführungsform der Erfindung der Prüfling auf einem Monitor als Funktion von $\Delta$ (Delta) und $\psi$ (Psi) oder der optischen Eigenschaften n und k dargestellt werden. Dazu ist eine Aufweitung des parallelen Lichtstrahles vorzunehmen, um die Bildsensoren in ihrer gesamten Fläche auszuleuchten. Eine Strahlaufweitung vor dem Prüfling führt zu einer 1 : 1-Abbildung des Prüflings, eine Strahlaufweitung vor jedem Bildsensor zeigt eine mikroskopische Abbildung des Prüflings. Rechts-/links-Vertauschungen, die durch Reflexion entstehen, sind dabei durch hochreflektierende Spiegel vor einem Bildsensor oder durch eine zeileninvertierende Ansteuerung des Bildsensors rückgängig zu machen.

Von einem Prüfling mit rauher Oberfläche unter einem bestimmten Raumwinkel gestreute elektromagnetische Strahlung kann mit Hilfe einer Sammellinse parallelisiert und bei Ausführungsformen der Erfindung simultan analysiert werden. Der Effekt der Sammellinse ist für unterschiedliche Raumwinkel jeweils passend zu berücksichtigen, wobei geringere Abstände zwischen Sammellinse und Prüfling größere zu analysierende Raumwinkel ermöglichen, jedoch auch größere Linseneffekte bewirken.

Als simultane spektroskopische Ellipsometrie läßt sich eine Meßmethode bezeichnen und mit Ausführungsformen der Erfindung durchführen, bei der dem Prüfling ein breites Spektrum von linear polarisiertem, im Extremfall weißes Sondenlicht zugeführt und das vom Prüfling transmittierte/reflektierte Meßlicht analysiert wird. Das im jeweiligen Modul der Analysatoreinheit zum Detektor gelangende Licht kann mit Hilfe eines Prismas, Gitters oder dgl. spektral längs der Achse des Detektors zerlegt werden. Die Verarbeitung der Signale von den jeweils einer Wellenlänge zugeordneten Pixeln der vier Bildsensoren mit den von der Wellenlänge abhängigen Auswertungskonstanten ergibt die spektrale Ellipsometrie in Echtzeit.

Eine weitere Gruppe von Ausführungsformen der Erfindung bezieht sich auf Anwendungen der ellipsometrischen Verfolgung elektrochemischer Prozesse an lichtempfindlichen Materialien. Dazu ist eine Absenkung der Intensität des einstrahlenden Sondenlichts in einem solchen Ausmaß erforderlich, daß dessen Auswirkungen gegenüber der eigentlichen, zu beobachtenden Reaktion vernachlässigbar sind. Hierzu kann zwischen Lichtquelle und Prüfling ein Intensitätsmodulator, z.B. Faraday-Modulator, angeordnet werden. Der dem Faraday-Modulator zugeführte Steuerstrom beeinflußt die Lichtintensität zwischen zwei gekreuzten Linearpolarisatoren stufenlos. Eine Überlagerung mit einer Wechselkomponente ermöglicht eine Intensitätsmodulation mit einem Frequenzspektrum von Oberwellen der Anregungsfrequenz.

Eine zusätzliche Abschwächung kann durch Neutralfilter erfolgen. Auch eine Viertelwellenlängenplatte kann hierbei noch eingefügt werden.

In der nachstehenden stichwortartigen Zusammenstellung sind die Merkmale vorteilhafter Ausführungsformen der Erfindung aufgeführt, die auch Gegenstand von Unteransprüchen sind:

- als Brewsterplatte ausgebildeter Polarisator,

-- mit reflektiver Komponente als Meßlicht und transmissiver Komponente als Restlicht;

- strahlengeometrische Orientierung der Module:
 $0° \to 90° \to \pm\, 45° \to \lambda/4\, \&\, \pm\, 45°$;
- Referenz-Detektor an der Sondenlichtquelle;
- Bild gebender Detektor in jedem Modul (Kamera/Bildsensor);

- - Strahlaufweitungs-Optik im Strahlengang;

 - - - vor jedem Bildsensor;
 - - - vor jedem Prüfling;

- Restlicht-Detektor als "fünfter" Stufe.

In der Zeichnung sind Ausführungsformen der Erfindung schematisch dargestellt. Dabei zeigen:

Fig. 1:   eine Apparatur für ellipsometrische Untersuchungen mit ihren Komponenten der Polarisatoreinheit, dem Prüfling und den Alternativen für Detektoreinheiten, die entweder reflektiertes oder transmittiertes Licht empfangen;

Fig. 2:   eine elektrochemische Zelle, in der sich der zu untersuchende Prüfling befindet;

Fig. 3:   eine Detaildarstellung einer Polarisatoreinheit für den Einsatz in einer Apparatur mit einer elektrochemischen Zelle gemäß Fig. 2 für den Prüfling;

Fig. 4:   den Aufbau eines Moduls für die Detektoreinheit, mit einem einfachen opto-elektrischen Detektor;

Fig. 5:

und   den Aufbau eines Moduls für die Detektoreinheit, mit einem Bild gebenden opto-elektrischen Detektor

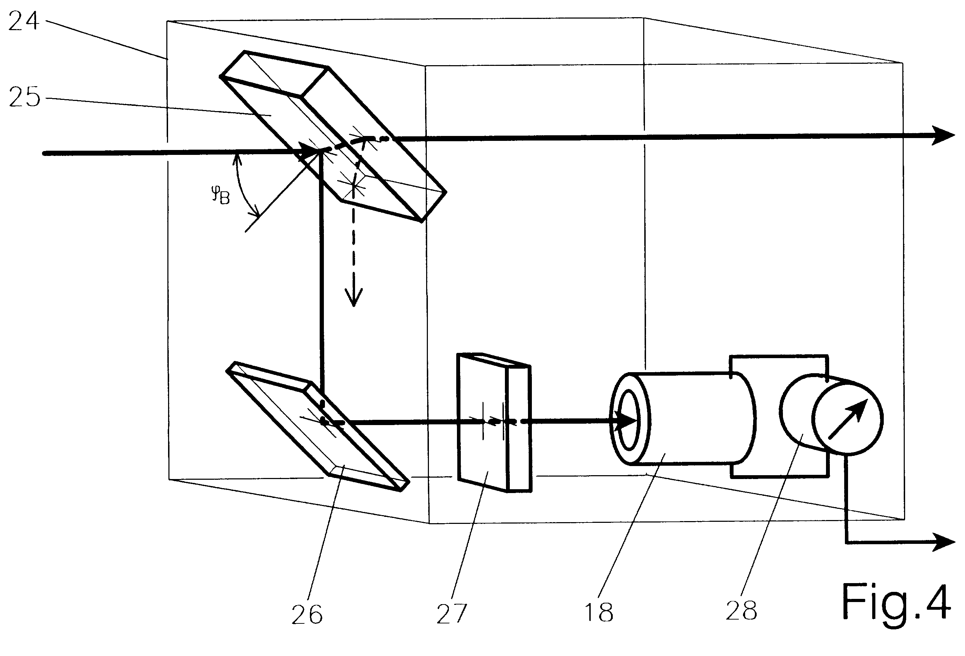

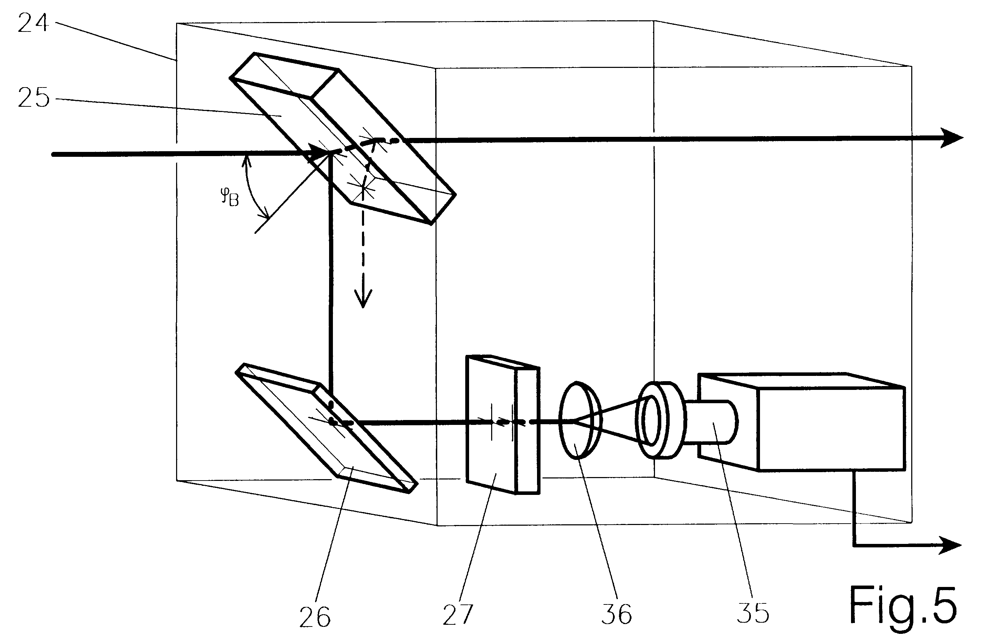

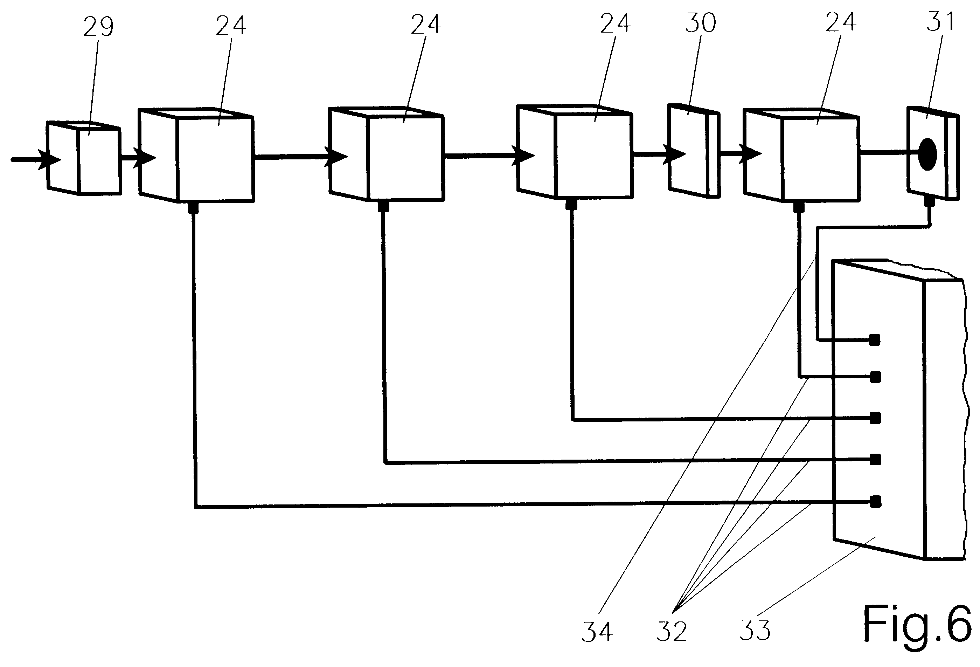

Fig. 6:   den Aufbau einer Analysatoreinheit mit vier Modulen gemäß Fig. 4 bzw. 5, die an einen Prozeßrechner angeschlossen sind.

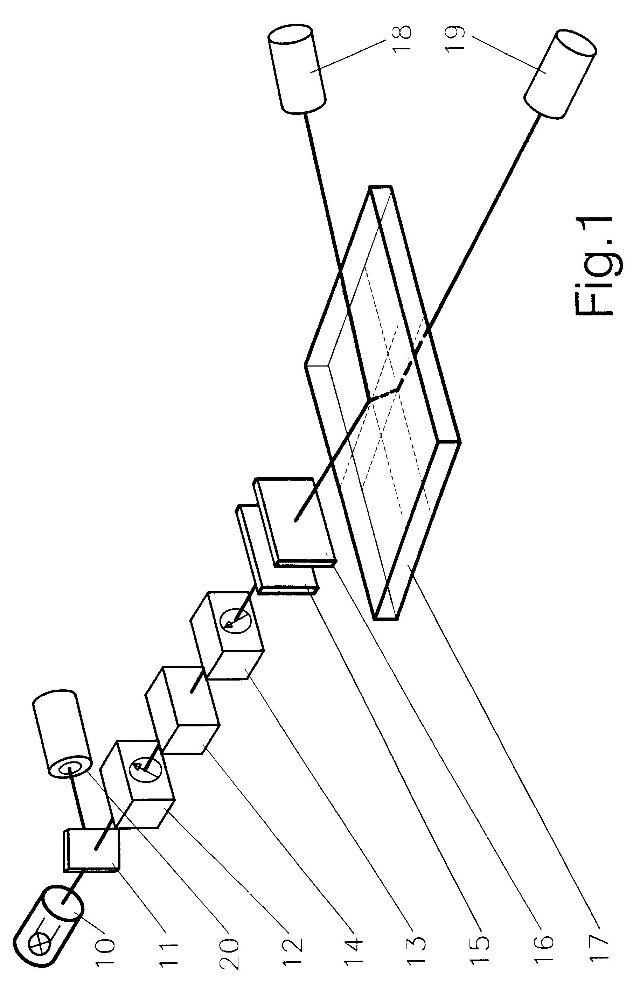

Bei der in Fig. 1 gezeigten Apparatur weist die Polarisator-Einheit eine Lichtquelle 10, einen Strahlteiler 11, einen ersten Polarisator 12, einen Polarisationsmodulator 14, einen zweiten Polarisator 13, eine Viertelwellenlängenplatte 15 und ein Neutralfilter 16 im Stahlengang vor dem Prüfling 17 auf. Die Viertelwellenlängenplatte 15 und das Neutralfilter 16 sind für spezielle Einsatzzwecke gedacht, können also auch entfallen. Das vom Strahlteiler 11 abgespaltene Licht gelangt zu einem Referenz-Detektor 20, das vom Prüfling 17 reflektierte Licht zu einem Detektor 18 und/ oder das transmittierte zu einem Detektor 19.

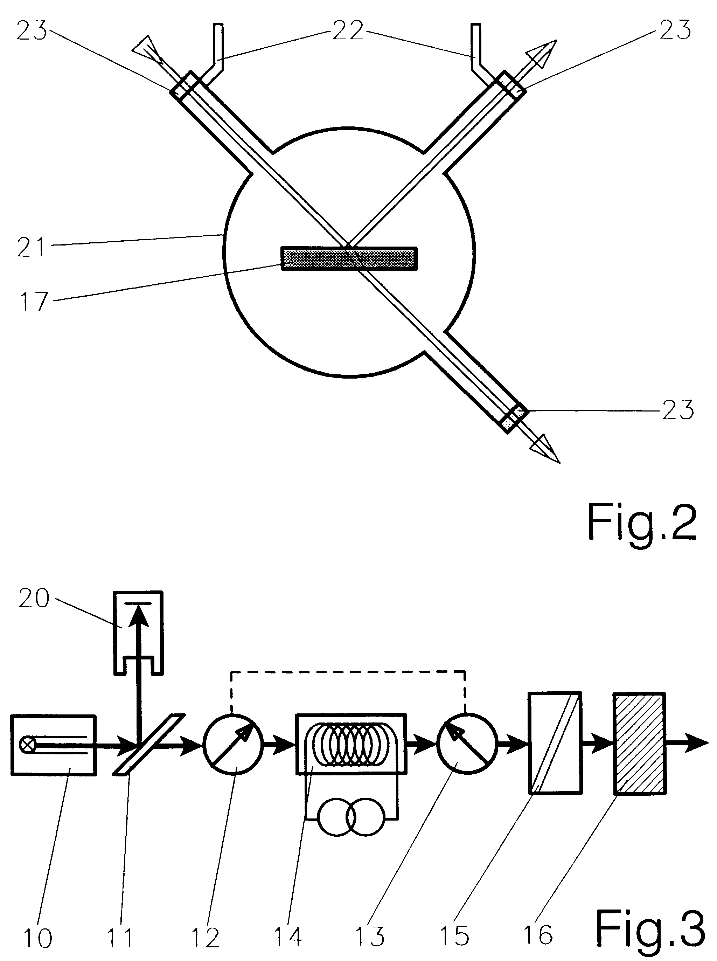

In einer in Fig. 2 gezeigten elektrochemischen Zelle 21 wird das einfallende Sondenlicht von einem Prüfling 17 mit photoelektrischen Eigenschaften, der photochemische Reaktionen zeigt, reflektiert oder transmittiert. Das Fequenzspektrum der Lichtintensität dient zu Untersuchungen des resultierenden Photostromes, der dem Gleichstrom zwischen den Elektroden der elektrochemischen Zelle überlagert ist. Das sehr schwache, vom Prüfling reflektierte oder transmittierte Licht ist in seiner Polarisationsrichtung so einzustellen, daß die Analysatoreinheit mit ihren einzelnen Detektoren optimal ausgeleuchtet wird. Die Zelle 21 weist Entlüftungsstutzen 22 und Fenster 23 für einfallendes, reflektiertes und/oder transmittiertes Licht auf.

Für Untersuchungen an Prüflingen 17 in einer derartigen elektrochemischen Zelle 21 gelangt eine Polarisatoreinheit gemäß Fig. 3 zum Einsatz, damit unerwünschte lichtempfindliche Prozesse vermieden werden. Diese Polarisatoreinheit enthält die bereits im Zusammenhang mit der Erläuterung zu Fig. 1 genannten Komponenten. Hier ist jedoch der Polarisationsmodulator 14 als Faraday-Modulator angedeutet, der es ermöglicht, bei der Abschwächung des Sondenlichts gleichzeitig ein Wechselsignal aufzuprägen. Mit Hilfe von Lock-in-Verstärkern lassen sich auf diese Weise noch Detektorsignale im nW-Bereich mit hoher Präzision messen und einer ellipsometrischen Auswertung unterziehen.

Die Fig. 4 und 5 zeigen den Aufbau von Modulen 24 für die Analysatoreinheit. Das dort einfallende Licht trifft auf eine als Polarisator 25 wirkende Brewsterplatte. Als Meßlichtstrahl gelangt das an der vorderen Fläche des Polarisators 25 reflektierte Licht auf einen Umlenkspiegel 26, der auch eine Rechts-/links-Vertauschung am Polarisator 25 rückgängig macht. Diese Funktion ist für Ausführungsformen mit bildgebenden Detektoren erwünscht, vgl. Fig. 5; dort tritt an die Stelle eines Detektors 18 und eines Anzeige-Instruments 28 eine Kamera 35.

Ein Abschwächer 27 dient dazu, die Abschwächung der einzelnen Stufen zu berücksichtigen. Die Intensität des Meßlichts, das zum Detektor 18 gelangt, kann von einem Instrument 28 angezeigt und einem - hier nicht gezeigten, vgl. aber Fig. 6 - Prozeßrechner zugeführt werden. Bei der Ausrüstung der Module 24 mit Kameras 35 befindet sich vor diesen im Strahlengang des Meßlichts noch eine Aufweitungslinse 36.

An der Rückseite des Polarisators 25 reflektiertes und an seiner Vorderseite wieder austretendes Licht wird am Umlenkspiegel 26 vorbei geleitet oder in anderer Weise ausgeblendet. Das transmittierte Restlicht verläßt diesen Modul 24 und gelangt als einfallendes Licht zum nächsten der insgesamt vier Stufen.

Die vollständige Analysatoreinheit zeigt als Blockschaltbild die Fig. 6. Dort - vom Prüfling her - eintreffendes Licht kann mittels eines Polarisations-Drehers 29 in seiner Polarisationsrichtung bezüglich der Ausleuchtung des Analysator-Module-Systems optimal eingestellt werden. Zwischen dem vorletzten und dem letzten Modul 24 ist ein Viertelwellenlängenplättchen 30 im Strahlengang angeordnet. Die gegenseitige Orientierung der Module 24 bezüglich der Polarisationsrichtung des Lichts, das den Polarisations-Dreher 29 verläßt, ist in diesem Fall von Stufe zu Stufe fortschreitend auf 0°, 90°, ± 45° und wegen λ/4 wiederum ± 45° einzustellen. Für den letzten Modul 24 gegebenenfalls noch verlassendes Restlicht kann ein Restlicht-Detektor 31 vorgesehen werden, dessen Ausgangssignal zu Justagezwecken der Apparatur verwendbar ist und über eine Signalleitung 34 dem Prozeßrechner 33 zugeführt wird. . Die Ausgangssignale der Detektoren 18 bzw. Kameras 35 in den Modulen 24 werden über Signalleitungen 32 dem Prozeßrechner 33 zugeführt und dort in der vorgesehenen Weise in Echtzeit verarbeitet.

Wird die Analysatoreinheit in der Form mit transmissiven Restlicht-/reflektiven Meßlicht-Strahlen bei derjenigen Wellenlänge betrieben, bei der die Polarisatoren 25 der einzelnen Stufen als Brewsterplatten wirken, kann die strahlengeometrische Ausrichtung der Module 24 in Bezug auf die Einfallsebene durch Einstrahlen von rein p- oder rein s-polarisiertem Licht geprüft werden.

Relative Skalierungsfaktoren lassen sich bei jeweiligen Detektor-Verstärkern durch Einstrahlen von vollkommen unpolarisiertem Licht kalibrieren. Die absolute Kalibrierung erfolgt durch Vergleichen von $S_0$ mit der vom Detektor 20 (s. Fig. 1) gelieferten Referenz.

## Patentansprüche

1. Apparatur für ellipsometrische Untersuchungen von Materialien, mit:

    - Einrichtungen zur Erzeugung von Sondenlicht und zur Beeinflussung des Sondenlichts zumindest hinsichtlich seines Polarisationszustandes,
    - einer Vorrichtung zur Halterung eines mittels des Sondenlichts zu untersuchenden Prüflings,
    - einer Analysator-Einrichtung für das vom Prüfling kommende Sondenlicht. mit elektrischen Nachweismitteln zum Erfassen der Intensitäten von vier, jeweils mittels diskreter Elemente selektierter Komponenten unterschiedlicher Polarisation, die zur vollständigen Bestimmung des Stokes-Vektors erforderlich sind,

    und mit

    - einem Prozeßrechner, dem die als Meßdaten erfaßten Intensitätswerte zugeführt werden, zur Auswertung und Verarbeitung der Meßdaten für die selbsttätige Steuerung von.Einrichtungen und Vorrichtungen der Ellipsometer-Apparatur und für die Ausgabe von Informationen bezüglich der Untersuchungsergebnisse,

    **dadurch gekennzeichnet**, daß
    die Analysator-Einrichtung, bei der in Stufen aus im wesentlichen baugleichen und strahlenoptisch aufeinander ausgerichteten Modulen die selektierten Komponenten unterschiedlicher Polarisation simultan erfaßt werden, vier baugleiche und strahlenoptisch aufeinander ausgerichtete Module (24) aufweist, die jeweils ein als Brewsterplatte ausgebildeten Polarisator (25) als optisches Element und einen opto-elektrischen Detektor (18, 19, 35) enthalten, und daß jeder der Polarisatoren (25) unter dem Brewsterwinkel zum einfallenden Lichtstrahl justiert ist und eine zum zugeordneten Detektor (18, 19, 35) gelangende, spezifisch polarisierte reflektive Komponente als Meßlichtstrahl sowie einen zum Modul (24) einer vorhandenen nachfolgenden Stufe gelangenden, nach naturgesetzlichen Beziehungen sowohl hinsichtlich seines Polarisationszustandes als auch seines Polarisationsgrades beeinflußten Restlichtstrahl als transmissive Komponente abgibt,
    und daß
    der Prozeßrechner (33) in Echtzeit alle Meßdaten auswertet und die auszugebenden Informationen über Polarisationszustand und Polarisationsgrad des vom Prüfling (17) kommenden Sondenlichts bereitstellt.

**2.** Apparatur nach Anspruch 1,
**gekennzeichnet durch**
eine strahlengeometrische Orientierung der Module (24) derart, daß die Hauptachse der ersten Stufe parallel, der zweiten Stufe senkrecht, der dritten und der vierten Stufe jeweils unter 45° zur Einfallsebene ausgerichtet sind und vor der vierten Stufe ein Viertelwellenlängenplättchen (30) angeordnet ist.

**3.** Apparatur nach einem der Ansprüche 1 oder 2,
**gekennzeichnet durch**
einen Referenz-Detektor (20) an der das Sondenlicht erzeugenden Einrichtung.

**4.** Apparatur nach einem der Ansprüche 1 bis 3,
**gekennzeichnet durch**
Bild gebende Detektoren (35) in den Modulen (24) der Analysatoreinheit.

**5.** Apparatur nach Anspruch 4,
**gekennzeichnet durch**
ein optisches Linsensystem zur Strahlaufweitung, das im Strahlengang vor dem Prüfling (17) angeordnet ist.

**6.** Apparatur nach Anspruch 4,
**gekennzeichnet durch**
ein optisches Linsensystem (36) zur Strahlaufweitung, das baugleich bei jedem Modul (24) im Strahlengang vor dem Bild gebenden Detektor (35) angeordnet ist.

**7.** Apparatur nach einem der Ansprüche 1 bis 6,
**gekennzeichnet durch**
einen Lichtintensitäts-Modulator (14), der im Strahlengang vor dem Prüfling (17) angeordnet ist.

**8.** Apparatur nach einem der Ansprüche 1 bis 7,
**gekennzeichnet durch**
einen Restlicht-Detektor (31) als fünfter Stufe der Analysator-Einheit.


**Claims**

**1.** Apparatus for ellipsometric investigations of materials having

- devices for producing probe light and for influencing the probe light at least with regard to its polarization state,
- an arrangement to hold a test piece which is to be investigated by means of the probe light,
- an analyzer device for the probe light coming from the test piece, having electrical detecting means to detect the intensities of four components that are each selected by means of discrete elements and are of differing polarization which are required for complete determination of the Stokes' vector,

and having

- a process computer, to which there are fed the intensity values that are detected as measurement data, for the purpose of evaluating and processing the measurement data for the automatic control of devices and arrangements of the ellipsometer apparatus and for the output of information relating to the investigation results,

characterised in that
the analyzer device, in which in stages consisting of modules which are substantially identical in terms of construction and which are aligned in relation to each other in terms of optical geometry the selected components of differing polarization are simultaneously detected, has four modules (24) which are identical in terms of construction and are aligned in relation to each other in terms of optical geometry and which, in each case, contain a polarizer (25) as an optical element, formed as a Brewster plate, and an optoelectric detector (18, 19, 35), and in that each of the polarizers (25) is adjusted at the Brewster angle in relation to the incident light beam and emits a specifically polarized reflective component as a measuring light beam, which reaches the associated detector (18, 19, 35), and also a residual light beam as a transmissive component, which reaches the module (24) of a subsequent stage that is present and is influenced according to natural-law relationships as well as with regard to its polarization state and also its degree of polarization, and in that the process computer (33) evaluates all the measurement data in real time and provides the information which is to be output on the polarization state and degree of polarization of the probe light coming from the test piece (17).

2. Apparatus according to claim 1, characterised by a beam-related geometrical orientation of the modules (24) of such a kind that the main axis of the first stage is aligned in a parallel manner, that of the second stage is aligned in a perpendicular manner, that of the third and the fourth stages are, in each case, aligned so as to be at 45° relative to the plane of incidence and a quarter-wave plate (30) is arranged in front of the fourth stage.

3. Apparatus according to one of the claims 1 or 2, characterised by a reference detector (20) at the device generating the probe light.

4. Apparatus according to one of the claims 1 to 3, characterised by image-transmitting detectors (35) in the modules (24) of the analyzer unit.

5. Apparatus according to claim 4, characterised by an optical lens system for beam divergence, which system is arranged in the beam path in front of the test piece (17).

6. Apparatus according to claim 4, characterised by an optical lens system (36) for beam divergence, which system, being identical in terms of construction for each module (24), is arranged in the beam path in front of the image-transmitting detector (35).

7. Apparatus according to one of the claims 1 to 6, characterised by a light-intensity modulator (14) which is arranged in the beam path in front of the test piece (17).

8. Apparatus according to one of the claims 1 to 7, characterised by a residual light detector (31) as a fifth stage of the analyzer unit.

**Revendications**

1. Appareil pour l'examen de matériaux par ellipsométrie, comportant:

   - des dispositifs pour créer une lumière de sondage et pour agir sur la lumière de sondage, au moins en ce qui concerne son état de polarisation,
   - un dispositif pour maintenir une éprouvette à examiner au moyen de la lumière de sondage,
   - un dispositif à analyseur pour la lumière de sondage provenant de l'éprouvette, comportant des moyens électriques d'indication pour détecter l'intensité de quatre composantes de polarisation différente, sélectionnées chacune au moyen d'éléments discrets, et qui sont nécessaires pour la détermination complète du vecteur de Stokes,

   et comportant

   - un calculateur de processus auquel les valeurs détectées de l'intensité sont transmises à titre de données de mesure, pour évaluation et traitement des données de mesure en vue de la commande automatique d'installations et de dispositifs de l'appareil d'ellipsométrie et pour l'émission d'informations concernant les résultats de l'examen,

   caractérisé en ce que
   le dispositif à analyseur, dans lequel les composantes sélectionnées de polarisation différente sont détectées simultanément dans des étages constitués de modules de construction essentiellement identique et optiquement alignés l'un sur l'autre dans le parcours du rayonnement, présente quatre modules (24) de construction identique et optiquement alignés l'un sur l'autre dans la parcours du rayonnement, qui contiennent chacun un polariseur (25) configuré comme lame sous incidence Brewsterienne qui sert d'élément optique et un détecteur opto-électrique (18, 19, 35), et en ce que chacun des polariseurs (25) est ajusté suivant l'angle d'incidence Brewsterienne par rapport au rayon lumineux incident, émet comme rayon de lumière de mesure une composante de réflexion polarisée de manière spécifique se rendant vers le détecteur (18, 19, 35) associé, et émet comme composante de transmission un rayon lumineux résiduel se rendant vers le module (24) d'un étage situé en aval, influencé par les conditions des lois naturelles tant en ce qui concerne son état de polarisation que son degré de polarisation, et en ce que

pendant la durée d'étalonnage, le calculateur de processus (33) évalue toutes les données de mesure et prépare les informations à fournir sur l'état de polarisation et le degré de polarisation de la lumière de sondage provenant de l'éprouvette (17).

2. Appareil selon la revendication 1, caractérisé par une orientation géométrique des modules (24) dans le parcours du rayonnement telle que l'axe principal du premier étage est orienté parallèlement au plan incident, celui du deuxième étage est orienté perpendiculairement à ce plan et ceux du troisième et du quatrième étage sont chacun orientés à 45° par rapport à ce plan incident, et une lame quart d'onde (30) est disposée en amont du quatrième étage.

3. Appareil selon l'une des revendications 1 ou 2, caractérisé par un détecteur de référence (20) sur le dispositif créant la lumière de sondage.

4. Appareil selon l'une des revendications 1 à 3, caractérisé par des détecteurs (35) fournissant une image dans les modules (24) de l'unité d'analyse.

5. Appareil selon la revendication 4, caractérisé par un système optique de lentilles pour l'élargissement du faisceau, lequel système est disposé en amont de l'éprouvette (17) dans le parcours du rayonnement.

6. Appareil selon la revendication 4, caractérisé par un système optique de lentilles (36) pour l'élargissement du faisceau, qui est de construction identique pour chaque module (24) et est disposé dans le parcours du rayonnement en amont du détecteur (35) fournissant une image.

7. Appareil selon l'une des revendications 1 à 6, caractérisé par un modulateur (14) d'intensité de la lumière, qui est disposé dans le parcours du rayonnement en amont de l'éprouvette (17).

8. Appareil selon l'une des revendications 1 à 7, caractérisé par un détecteur de lumière résiduelle (31) servant de cinquième étage de l'unité d'analyse.

Fig.1

Fig.2

Fig.3

$\varphi_B$

24
25
26
27
18
28

Fig.4

EP 0 508 558 B1

Fig.5

Fig.6